# EUROPEAN PATENT APPLICATION

(11) **EP 2 551 200 A2**
(43) Date of publication of application: **30.01.2013**
(21) Application number: 12178202.3
(22) Date of filing: 27.07.2012
(51) Int. Cl.: B64D 37/32

(54) **A snorkel for a pressure holding valve for an aircraft fuel tank**

(30) Priority: 28.07.2011 GB 201113023
(71) Applicant: Airbus Operations Limited, Bristol BS99 7AR (GB)
(72) Inventor: Sanguignol, Cedric, BS99 7AR Bristol (GB)
(74) Representative: Scott, Alistair Francis

(57) **Abstract**

A snorkel (212) for a pressure holding valve (205) for an aircraft fuel tank (105).

## Description

### Field of Invention

The present invention relates to a snorkel for a pressure holding valve for an aircraft fuel tank.

### Background of the Invention

Aircraft fuel systems commonly comprise an atmospheric venting system and a closed loop venting system. The atmospheric venting system is arranged to vent the ullage of the fuel tanks to atmosphere. The closed loop venting system is arranged to provide venting for a given fuel tank when access to the atmospheric venting system is closed, such as when the given fuel tank is pressurized to facilitate fuel transfer from the that tank to another tank in the fuel system. The closed loop venting system commonly vents into another fuel tank in the system.

A pressure holding valve (PHV) is commonly fitted at the point where the closed loop venting system vents into the relevant fuel tank. The PHV is arranged to enable the release of fluids or vapours from the closed loop venting system into the relevant fuel tank once the pressure in the closed loop venting system exceeds a predetermined threshold. The PHV is further arranged, in combination with a non-return valve (NRV) to prevent any backflow from the relevant fuel tank into the closed loop venting system.

However, a problem with PHVs is that their operation is noisy. Such mechanical noise is undesirable, in particular, when it is audible within the passenger cabin.

### Summary of the Invention

An embodiment of the invention provides a snorkel for a pressure holding valve associated with an aircraft fuel tank, the snorkel comprising:
coupling means for coupling the snorkel to the output of a pressure holding valve;
a pipe fixed to the coupling means and arranged to extend from the output into the ullage of a fuel tank, the pipe being arranged to provide fluid communication between the output of the pressure holding valve and the ullage.

The pressure holding valve may be located within the fuel tank. The snorkel may be arranged to provide fluid communication between the output of the pressure holding valve and the forward end of the fuel tank so as to maintain the fluid communication when the aircraft is climbing. The snorkel may be integral with the output of the pressure holding valve. The upper open end of the pipe may be positioned within minimal ullage of the fuel tank.

Another embodiment provides a fuel tank system for an aircraft comprising:
a first and second fuel tanks;
a venting system for venting the ullage of the first fuel tank to atmosphere;
a closed loop venting system for venting the ullage of the second tank into the first tank, the closed loop venting system comprising a pressure holding valve;
a snorkel coupled to the output of the pressure holding valve and arranged to extend from the output of the pressure holding valve in the first tank into the ullage of the first fuel tank so as to provide fluid communication between the output of the pressure holding valve and the minimal ullage.

The pressure holding valve may be located within the first tank.

### Brief Description of the Drawings

Embodiments of the invention will now be described, by way of example only, with reference to the accompanying drawings in which:
Figure 1 is a schematic illustration of an aircraft;
Figure 2 is a cross sectional schematic illustration of a fuel tank system in the aircraft of figure 1;
Figure 3 is a cross sectional schematic illustration of a snorkel in the fuel tank system of figure 2;

### Detailed Description of Embodiments of the Invention

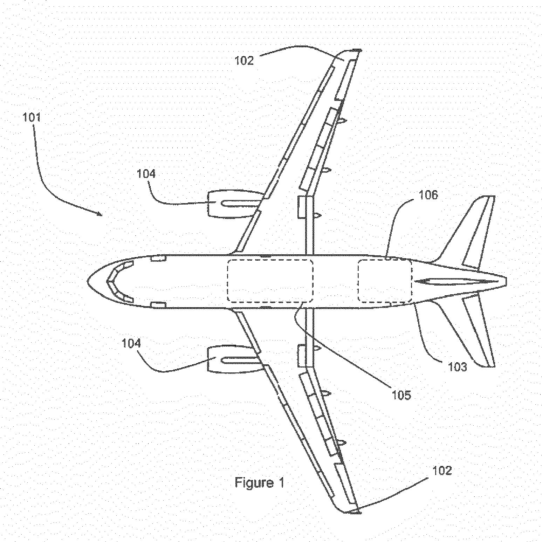

With reference to figure 1, an aircraft 101 comprises a pair of wings 102 faired into a fuselage 103. Each of the wings carries an engine 104. In the present embodiment, in addition to the standard fuel tanks (not shown) conventionally provided in the wings 102, the aircraft 101 is provided with two additional fuel tanks 105, 106. The first additional fuel tank 105 is located in the central section of the wing box and is commonly referred to as a centre tank or a centre wing box tank. The second additional fuel tank 106 is located in the aft section of the fuselage 103 within the cargo space. Such tanks are commonly referred to as additional central tanks (ACTs).

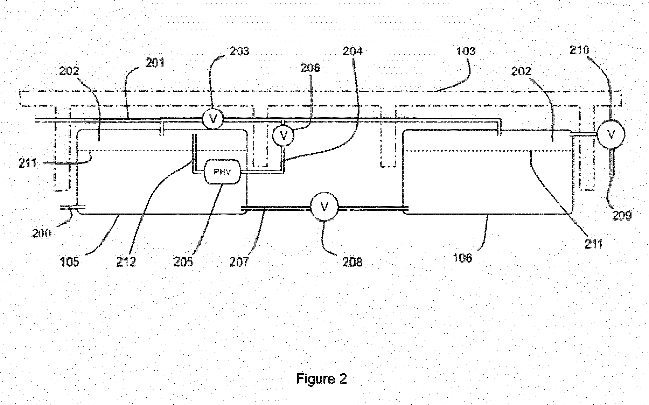

With reference to figure 2, the centre tank 105 is connected to the fuel supply system 200 for the engines 104 so as to provide additional fuel capacity for the aircraft 101. The ACT 106 is connected to the centre tank 105 thus expanding the capacity of the centre tank 105. The centre tank 105 is connected to the atmospheric venting system 201 for the aircraft fuel tank system that vents the ullage 202 of the standard fuel tanks on the aircraft 101 and the centre tank 105 to atmosphere. The ACT 106 is provided with a closed loop venting system 204, which provides internal venting of the ullage 202 of the ACT 106 into the centre tank 105. The closed loop venting system 204 comprises a valve system 203 operable in an open mode where the ullage 202 of the ACT 106 is vented to atmosphere via the atmospheric venting system 201 and in a closed mode where internal venting is provided via the centre tank 105 and an associated pressure holding valve (PHV) 205.

The additional fuel tanks 105, 106 are also provided with a fuel transfer connection 207, opened and closed via an associated valve 208, for allowing fuel flow between the tanks 105, 106. The ACT 106 is also provided with a pressurization input 209 controlled by a valve 210 for controllably pressurising the ACT 106. The fuel transfer connection 207 and pressurization input 209 enable fuel to be transferred from the ACT 106 to the centre tank 105. In order to move fuel under pressure, the valve 203 is closed so as to isolate the ACT 106 from the atmospheric venting system 201. The closed loop venting system 204 thereby provides venting of the ullage 202 of the ACT 106 into the centre tank 105 during such pressurised fuel movements.

The PHV 205 is fitted in the closed loop venting system 204 at the point at which the closed loop venting system 204 vents into the centre tank 105. The closed loop venting system 204 also comprises a non-return valve (NRV) 206 to prevent any flow along the closed loop venting system 204 out of the centre tank 105. In the present embodiment, the PHV 205 is located within the centre tank 105. The PHV 205 is arranged to release fluid or vapour from the closed loop venting system 204 once the pressure differential across the PVH 205 exceeds a predetermined level. The predetermined level is set in the PHVs 205. The PHV 205 thus acts as a safety valve to ensure that the pressure in the ACT 106 does not exceed a predetermined safe operation limit.

In the present embodiment, the structure of the fuselage 103 governs the routing of the closed loop venting system 204 so that it enters the centre tank 105 below the minimal ullage 211. This results in the PHV 205 being submerged in fuel when the centre tank 105 is full. In the present embodiment, the PHV 205 is fitted with a snorkel 212 arranged to provide fluid communication between the PHV 205 and the ullage 202 of the centre tank 105.

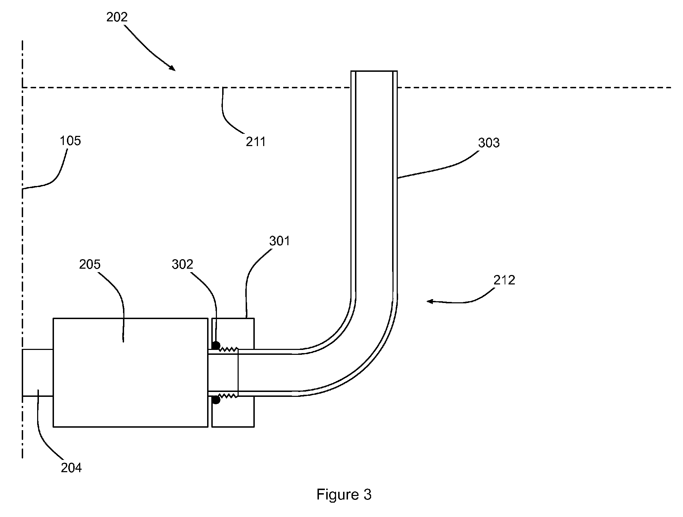

With reference to figure 3, the snorkel 212 comprises attachment means in the form of a coupling ring 301, which is threadably engaged with the output of the PHV 205 so as to couple the snorkel 212 to the PHV 205. The joint between the coupling ring 301 and the output of the PHV 205 is provided with fluid sealing means in the form of an o-ring 302. The coupling ring 301 is fixed, by fluid-tight means, such as a hydraulic connection, to a pipe 303. The pipe 303 is arranged to run from the output of the PHV 205 into the minimal ullage 211 of the fuel tank 105, 106. Thus the snorkel 212 provides fluid communication between the output of the PHV 205 and the minimal ullage 211.

In another embodiment, the PHV is installed outside the fuel tank and connected into it via suitable additional pipe work. In other words, while the body of the PHV is located outside the fuel tank and thus avoids being submerged in fuel, the output of the PHV is connected into the fuel tank. The output of the PHV is fitted with a snorkel as described above.

In a further embodiment, the snorkel is arranged to vent the output of the PHV into the forward part of the minimal ullage so that when the aircraft is climbing with full fuel tanks, the top of the snorkel remains within a fuel free space in the ullage.

Embodiments of the invention reduce or attenuate the noise from a submerged PHV by relieving or reducing the backpressure on the PHV caused by the surrounding fuel.

Embodiments of the invention reduce or attenuate the noise resulting from pressurised bubbles of gas or vapour being vented into the fuel tank via a submerged PHV.

As will be understood by those skilled in the art, the snorkel described herein may be applied to any fuel tank system or arrangement. The fuel tank system may comprise only standard tanks or one or more additional fuel tanks.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details of the representative apparatus and method, and illustrative examples shown and described. Accordingly, departures may be made from such details without departure from the scope of applicant's general inventive concept.

## Claims

1. A snorkel for a pressure holding valve associated with an aircraft fuel tank, said snorkel comprising:
coupling means for coupling said snorkel to the output of a pressure holding valve;
a pipe fixed to said coupling means and arranged to extend from said output into the ullage of a fuel tank, said pipe being arranged to provide fluid communication between said output of said pressure holding valve and said ullage.

2. A snorkel according to claim 1 in which said pressure holding valve is located within said fuel tank.

3. A snorkel according to any preceding claim in which said snorkel is arranged to provide fluid communication between said output of said pressure holding valve and the forward end of said fuel tank so as to maintain said fluid communication when said aircraft is climbing.

4. A snorkel according to any preceding claim integral with said output of said pressure holding valve.

5. A snorkel according to any preceding claim in which the upper open end of said pipe is positioned within minimal ullage of said fuel tank.

6. A fuel tank system for an aircraft comprising:
a first and second fuel tanks;
a venting system for venting the ullage of said first fuel tank to atmosphere;
a closed loop venting system for venting said ullage of said second tank into said first tank, said closed loop venting system comprising a pressure holding valve;
a snorkel coupled to the output of said pressure holding valve and arranged to extend from said output of said pressure holding valve in said first tank into the ullage of said first fuel tank so as to provide fluid communication between said output of said pressure holding valve and said minimal ullage.

7. A fuel tank system according to claim 6 in which said pressure holding valve is located within said first tank.
